# EUROPÄISCHE PATENTANMELDUNG

(11) **EP 1 593 551 A1**
(43) Veröffentlichungstag der Anmeldung: **09.11.2005**
(21) Anmeldenummer: 04101422.6
(22) Anmeldetag: 06.04.2004
(51) Int. Cl.: B60R 16/02, B60Q 1/22

(54) **Schaltvorrichtung**

(71) Anmelder: Getrag Ford Transmissions GmbH, 50725 Köln (DE)
(72) Erfinder: Schaller, Gerhard, 66773, Schalbach/Saar (DE); Ralf, Bober, 50823, Köln (DE)
(74) Vertreter: Drömer, Hans-Carsten

(57) **Zusammenfassung**

Die Erfindung betrifft eine Schaltvorrichtung (20) zum elektrischen Schalten eines elektrischen Verbrauchers, insbesondere eines Rückfahrscheinwerfers, der mit einem Getriebe (22) elektrisch verbunden ist. Nach dem Stand der Technik sind solche Schaltvorrichtungen zum elektrischen Schalten von Rückfahrscheinwerfern zentral in einer separaten Schalteinheit untergebracht. Daraus resultiert ein relativ hoher Fertigungs- und Montageaufwand bei Verwendung unterschiedlicher Getriebetypen. Die Erfindung hat die Aufgabe die Schaltvorrichtung dahingehend zu verbessern, dass sie zukünftig bei Verwendung unterschiedlicher Getriebetypen einfach und kostengünstig montiert werden kann. Die Schaltvorrichtung (20) ist deshalb erfindungsgemäß in einem Steckverbindergehäuse (21) integriert, das zwischen einem mit dem Getriebe (22) verbundenen Getriebekabelbaum (12) und einem Fahrzeugkabelbaum (13) angeordnet ist.

## Beschreibung

Die Erfindung betrifft eine Schaltvorrichtung zum elektrischen Schalten eines elektrischen Verbrauchers, insbesondere eines Rückfahrscheinwerfers, der mit einem Getriebe elektrisch verbunden ist.

Solche Schaltvorrichtungen zum elektrischen Schalten von Rückfahrscheinwerfern sind bisher zentral in einer separaten Schalteinheit untergebracht. Nachteilig hierbei ist jedoch, dass diese separate zentrale Schalteinheit immer passend zum jeweils verwendeten Getriebetyp ausgerüstet werden muss. Außerdem muss die zur Schaltvorrichtung führende Verkabelung an die jeweilige Schaltvorrichtung angepasst werden. Dies bedeutet einen relativ hohen Fertigungs- und Montageaufwand, der somit auch kostenintensiv ist.

Ferner sind Schaltvorrichtungen bekannt, die im Getriebe untergebracht sind. Diese Anordnungen der Schaltvorrichtungen im Getriebe sind jedoch im Wartungsfall beim Austausch einer defekten Schaltvorrichtung äußerst schlecht erreichbar.

Die Erfindung hat die Aufgabe eine Schaltvorrichtung der eingangs genannten Art dahingehend zu verbessern, dass zukünftig die Schaltvorrichtung bei jedem Getriebetyp einfach und kostengünstig montiert werden kann.

Die Erfindung löst die gestellte Aufgabe durch eine Schaltvorrichtung der eingangs genannten Art, bei der erfindungsgemäß die Schaltvorrichtung in einem Steckverbindergehäuse integriert ist, das zwischen einem mit dem Getriebe verbundenen Getriebekabelbaum und einem Fahrzeugkabelbaum angeordnet ist. Somit kann zukünftig die passend zum jeweiligen Getriebetyp verwendete Schaltvorrichtung mit einem deutlich reduzierten Fertigungs- und Montageaufwand kostengünstig ins Fahrzeug eingebaut werden. Große aufwändige Veränderungen in zentral angeordneten separaten Schalteinheiten und an Verkabelungen können zukünftig bei der Verwendung unterschiedlicher Getriebetypen entfallen. Außerdem muss bei der Wartung der Schaltvorrichtung das Getriebe nicht aufwändig geöffnet und verschlossen werden.

Vorzugsweise schaltet die Schalteinheit einen Rückfahrscheinwerfer, indem vom Getriebe ein Signal erzeugt wird, wenn der Rückwärtsgang eingelegt ist. Es können jedoch auch alle anderen Verbraucher geschaltet werden, die vom Getriebe selber ihr Steuersignal erhalten.

Da das Steckverbindergehäuse häufig mit Spritzwasser und anderen Verunreinigungen aus der Umgebung in Kontakt kommt, ist es sinnvoll, wenn das Steckverbindergehäuse gegenüber der Umgebung abgedichtet ist.

Alternativ oder zusätzlich kann die Schaltvorrichtung in eine Dichtmasse eingebettet werden. Dadurch wird die Schaltvorrichtung sicher vor Verunreinigungen aus der Umgebung geschützt, und ihre einwandfreie Funktion gewährleistet. Die Schaltvorrichtung kann zur Einbettung mit der Dichtmasse umgossen werden.

In einer bevorzugten Ausführungsform kann die Schaltvorrichtung ein elektromagnetisches Relais sein.

Es ist jedoch auch möglich für die Schaltvorrichtung ein Halbleiterbauelement zu verwenden, wie beispielsweise einen Transistor oder andere dem Fachmann bekannte Halbleiterbauelemente.

Zweckmäßigerweise ist das die Schaltvorrichtung aufnehmende Steckverbindergehäuse mit dem Getriebekabelbaum verbunden. Das am Getriebekabelbaum angebrachte Steckverbindergehäuse kann somit mit einem am Fahrzeugkabelbaum angebrachten Steckverbinder zusammengesteckt werden.

Folglich müssen bei der Montage unterschiedlicher Getriebetypen am Fahrzeugkabelbaum keine Veränderungen durchgeführt werden, wodurch der Montageaufwand reduziert wird.

Um im Wartungsfall mühelos auf die Schaltvorrichtung zugreifen zu können, kann das Steckverbindergehäuse zu öffnen und verschließbar sein.

Damit bei einem Ausfall der Schaltvorrichtung erforderliche Wartungsarbeiten an der Schaltvorrichtung schnell und einfach durchgeführt werden können, kann das Steckverbindergehäuse in einer für das Wartungspersonal bequem erreichbaren Position angeordnet sein.

Um das Steckverbindergehäuse bei großen Stückzahlen preiswert fertigen zu können, kann es aus Kunststoff gefertigt sein.

Nachfolgend wird ein Ausführungsbeispiel der erfindungsgemäßen Schaltvorrichtung anhand der beiliegenden Zeichnungen näher erläutert.

Im Einzelnen zeigen:
- Fig. 1: eine schematische Ansicht der erfindungsgemäßen Schaltvorrichtung;
- Fig. 2: eine perspektivische Ansicht auf ein Getriebe und eine Schaltvorrichtung.

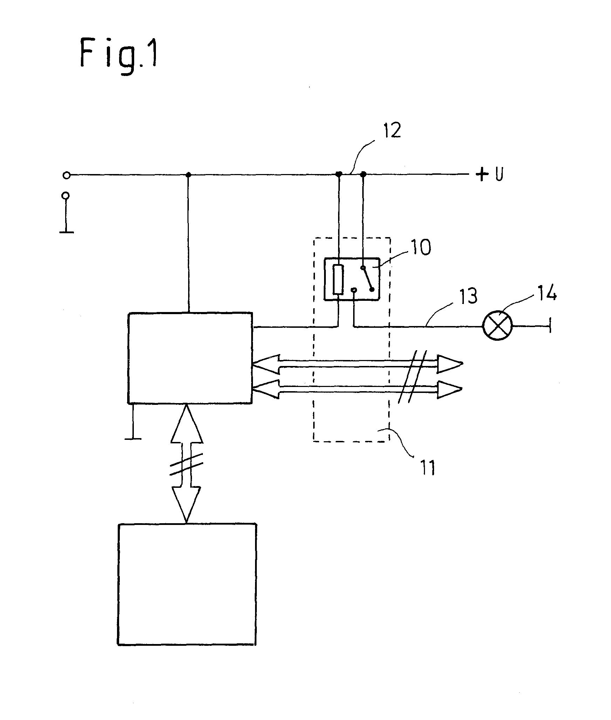

Fig. 1 zeigt eine Schaltvorrichtung 10, die in einem Steckverbindergehäuse 11 integriert ist. Die Schaltvorrichtung 10 ist an ihrer einen Seite mit einem zu einem hier nicht näher dargestellten Getriebe führenden Getriebekabelbaum 12 verbunden. An ihrer anderen Seite ist die Schaltvorrichtung 10 durch einen Fahrzeugkabelbaum 13 mit einem Rückfahrscheinwerfer 14 verbunden. Passend zum jeweils verwendeten Getriebetyp wird die entsprechende Schaltvorrichtung 10 verwendet. Durch den Einbau der Schaltvorrichtung 10 in das Steckverbindergehäuse 11 kann die Schaltvorrichtung 10 mit einem deutlich reduzierten Fertigungs- und Montageaufwand kostengünstig in ein Kraftfahrzeug eingebaut werden.

Um die Schaltvorrichtung 10 vor Spritzwasser und anderen Verunreinigungen aus der Umgebung zu schützen, ist das Steckverbindergehäuse 11 gegenüber der Umgebung abgedichtet. Alternativ oder zusätzlich kann die Schaltvorrichtung in eine Dichtmasse eingebettet werden.

Die Schaltvorrichtung 10 kann entweder ein elektromagnetisches Relais oder ein Halbleiterbauelement, wie beispielsweise ein Transistor sein.

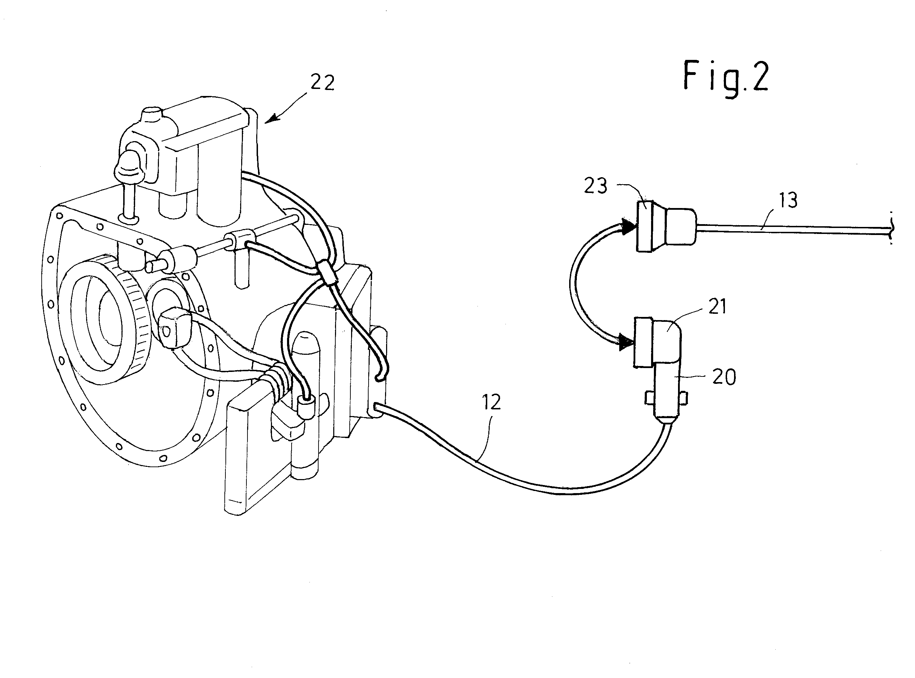

Fig. 2 zeigt eine Schaltvorrichtung 20, die in einem Steckverbindergehäuse 21 untergebracht ist. Das Steckverbindergehäuse 21 ist durch den Getriebekabelbaum 12 mit dem Getriebe 22 verbunden. Das Steckverbindergehäuse 21 kann mit einem Steckverbinder 23, der mit dem Kabelbaum 13 verbunden ist, zusammengesteckt werden. Da die Schaltvorrichtung 20 am Getriebekabelbaum 12 angeordnet ist, müssen bei der Montage unterschiedlicher Getriebetypen am Fahrzeugkabelbaum 13 keine Veränderungen durchgeführt werden. Dies reduziert den Montageaufwand deutlich.

Damit die Schaltvorrichtung bei Wartungsarbeiten mühelos erreicht werden kann, kann das Steckverbindergehäuse 21 in einer für das Wartungspersonal bequem erreichbaren Position angeordnet sein. Außerdem kann das Steckverbindergehäuse 21 zu öffnen und verschließbar sein, um bei Wartungsarbeiten mühelos auf die Schaltvorrichtung 20 zugreifen zu können.

## Patentansprüche

1. Schaltvorrichtung (10, 20) zum elektrischen Schalten eines elektrischen Verbrauchers, insbesondere eines Rückfahrscheinwerfers (14), der mit einem Getriebe (22) elektrisch verbunden ist,
**dadurch gekennzeichnet, dass** die Schaltvorrichtung (10, 20) in einem Steckverbindergehäuse (11, 21) integriert ist, das zwischen einem mit dem Getriebe (22) verbundenen Getriebekabelbaum (12) und einem Fahrzeugkabelbaum (13) angeordnet ist.

2. Schaltvorrichtung (10, 20) nach Anspruch 1,
**dadurch gekennzeichnet, dass** das Steckverbindergehäuse (11, 21) gegenüber der Umgebung abgedichtet ist.

3. Schaltvorrichtung (10, 20) nach Anspruch 1 oder 2,
**dadurch gekennzeichnet, dass** sie in eine Dichtmasse eingebettet ist.

4. Schaltvorrichtung (10, 20) nach einem der Ansprüche 1 bis 3,
**dadurch gekennzeichnet, dass** sie ein elektromagnetisches Relais ist.

5. Schaltvorrichtung (10, 20) nach einem der Ansprüche 1 bis 3,
**dadurch gekennzeichnet, dass** sie ein Halbleiterbauelement ist.

6. Schaltvorrichtung (10, 20) nach einem der Ansprüche 1 bis 5,
**dadurch gekennzeichnet, dass** das die Schaltvorrichtung (10, 20) aufnehmende Steckverbindergehäuse (11, 21) mit dem Getriebekabelbaum (12) verbunden ist.

7. Schaltvorrichtung (10, 20) nach einem der Ansprüche 1 bis 6,
**dadurch gekennzeichnet, dass** das Steckverbindergehäuse (11, 21) in einer für ein Wartungspersonal bequem erreichbaren Position angeordnet ist.

8. Schaltvorrichtung (10, 20) nach Anspruch 7,
**dadurch gekennzeichnet, dass** das Steckverbindergehäuse (11, 21) zu öffnen und verschließbar ist.

9. Schaltvorrichtung (10, 20) nach einem der Ansprüche 1 bis 6,
**dadurch gekennzeichnet, dass** das Steckverbindergehäuse (11, 21) aus Kunststoff gefertigt ist.
